(19) Europäisches Patentamt
European Patent Office
Office européen des brevets

(11) **EP 2 657 274 B1**

(12) **EUROPEAN PATENT SPECIFICATION**

(45) Date of publication and mention of the grant of the patent:
**04.03.2015 Bulletin 2015/10**

(21) Application number: **13171805.8**

(22) Date of filing: **22.12.2009**

(51) Int Cl.:
*C08G 77/04* (2006.01)  *C08F 2/28* (2006.01)
*C08F 18/08* (2006.01)  *C08L 31/04* (2006.01)
*C08L 83/04* (2006.01)  *C09D 4/00* (2006.01)
*C09D 7/12* (2006.01)  *C09D 201/00* (2006.01)
*B01J 13/22* (2006.01)  *C09D 183/04* (2006.01)
*C08K 9/08* (2006.01)  *C08G 77/14* (2006.01)
*B01J 13/18* (2006.01)  *C08F 218/08* (2006.01)
*C08G 77/18* (2006.01)  *C08K 7/22* (2006.01)

(54) **Hollow particles, process for producing the hollow particles, and use of the hollow particles**

Hohlpartikel, Verfahren zur Herstellung der Hohlpartikel und Verwendung der Hohlpartikel

Particules creuses, procédé de production de ces particules et leurs utilisations

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.12.2008 JP 2008329049**
**26.12.2008 JP 2008332683**

(43) Date of publication of application:
**30.10.2013 Bulletin 2013/44**

(62) Document number(s) of the earlier application(s) in accordance with Art. 76 EPC:
**09834864.2 / 2 386 590**

(73) Proprietor: **DENKI KAGAKU KOGYO KABUSHIKI KAISHA**
**Tokyo 103-8338 (JP)**

(72) Inventors:
• **Kawasaki, Takashi**
**Omuta-shi, Fukuoka 836-8510 (JP)**
• **Fukazawa, Motoharu**
**Omuta-shi, Fukuoka 836-8510 (JP)**
• **Hanazato, Shingo**
**Omuta-shi, Fukuoka 836-8510 (JP)**
• **Miyata, Kouji**
**Omuta-shi, Fukuoka 836-8510 (JP)**
• **Sugimoto, Isao**
**Omuta-shi, Fukuoka 836-8510 (JP)**

(74) Representative: **Gulde & Partner**
**Patent- und Rechtsanwaltskanzlei mbB**
**Wallstraße 58/59**
**10179 Berlin (DE)**

(56) References cited:
**EP-A1- 1 064 088    JP-A- 2000 226 453**

• **MARK J E ET AL: "REINFORCEMENT OF POLYDIMENTHYLSILOXANE NETWORKS BY BLENDED AND IN SITU GENERATED SILICA FILLERS HAVING VARIOUS SIZES, SIZE DISTRIBUTIONS AND MODIFIED SURFACES", RAPRA ABSTRACTS, RAPRA TECHNOLOGY LTD., SHREWSBURY, GB, vol. 36, no. 1, 1 January 1999 (1999-01-01), page 107, XP000800732, ISSN: 0033-6750**

## Description

## Technical Field

The present invention relates to a hollow particle, a process for producing the hollow particle, and use of the hollow particle.

## Background Art

In recent years, as reduction in the size and layer of a variety of industrial components is progressed, reduction in the size of the raw materials to be used has been progressed. Also in a powder used as a variety of raw materials, fine particles whose particle size is several to several tens of nanometers are needed as the particles that form the powder.

Furthermore, because there are cases where required properties cannot be demonstrated by the particle composed of a single material, composite particles in combination of a plurality of materials are used in such a case. Particularly, the composite particles having a core-shell type structure are useful as a raw material for hollow particles or the like.

As a process for producing such composite particles, in Patent Literature 1, a process has been proposed in which spherical polymer particles are uniformly dispersed in an alcohol solution of titanium alkoxide and/or silicon alkoxide or a mixed solution of alcohol/water, and a uniform titanium compound or silicon compound coating layer is provided by a hydrolysis reaction on the surfaces of the spherical polymer particles. Moreover, in Non Patent Literatures 1 and 2, a process has been proposed in which formation of a silicon compound coating layer is performed in an alcohol solution. Further, in Non Patent Literature 3, a process has been proposed in which an amino group ($-NH2^+$) and a carboxyl group ($-CO2^-$) are introduced into the surfaces of several tens of nanometers of fine polystyrene particles, and subsequently the surfaces thereof are coated with silica.

Moreover, in recent years, hollow particles have been examined in many ways as filling materials such as anti-reflective materials, low dielectric constant materials, insulating materials, and carriers for a drug delivery system because of its low refractive index, low dielectric constant, and high porosity. While the hollow particles composed of a silicon compound such as silica have high chemical stability, the silica hollow particles whose particle size is several to several tens of nanometers have further high transparency, fluidity, and filling properties, and therefore are particularly importantly used.

While a variety of processes has been proposed as a process for producing the hollow particles whose particle size is several to several tens of nanometers, a process is ordinary in which the core particle of the core-shell particle whose shell (outer shell) is silica is removed, thereby to obtain silica particles whose inside is hollow. The process is referred to as a templating method because the process uses the core particle like a mold plate (template). Further, a process using an inorganic compound as the core particle is referred to as an inorganic templating method, and a process using an organic polymer is referred to as an organic templating method.

In the inorganic templating method, a process using a composite product of silica and other inorganic compound that can be dissolved by an acid or an acidic cation exchange resin to be removed as the core particle (Patent Literatures 2 and 3), a process using calcium carbonate (Patent Literatures 4 and 5), a process using zinc oxide (Patent Literature 6) and the like have been proposed.

Moreover, in the organic templating method, a process using a styrene polymer or a styrene/divinylbenzene copolymer as the core particle (Patent Literature 7), a process using the composite particles described in Patent Literature 1 above as the core-shell particles, and the like have been proposed.

Further, as a process for removing such organic polymer particle, a process for removing organic polymer particles by heating core-shell particles to thermally decompose or burn the organic polymer particles has been proposed (Patent Literatures 1 and 7). Moreover, a process has been examined in which core-shell particles are dried from a salt solution of sodium chloride or the like thereby to precipitate the salt between the core-shell particles; subsequently, the organic polymer particles are thermally decomposed by heating to turn the core-shell particles into hollow particles; then, the salt between the particles is removed by washing with water, thereby to obtain hollow particles in which aggregates are little (Non Patent Literature 1).

## Citation List

### Patent Literature

Patent Literature 1: Japanese Patent Application Laid-Open Publication No. 6-142491

Patent Literature 2: Japanese Patent Application Laid-Open Publication No. 2001-233611
Patent Literature 3: WO2006/009132
Patent Literature 4: Japanese Patent Application Laid-Open Publication No. 2005-263550
Patent Literature 5: Japanese Patent Application Laid-Open Publication No. 2006-256921
Patent Literature 6: Japanese Patent Application Laid-Open Publication No. 2006-335605
Patent Literature 7: National Publication of International Patent Application No. 2003-522621

**Non Patent Literature**

Non Patent Literature 1: Journal of Chemical Engineeing of Japan, Vol. 37, No. 9, p. 1099 (2004)
Non Patent Literature 2: Chem.Mater., Vol. 2002, No.14, p. 1325
Non Patent Literature 3: Chemical Communication, p. 1010 (2003)
Non Patent Literature 4: Fresenius Jounal of Analytical Chemistry, Vol. 344, No. 6, p. 269 (1992)
Non Patent Literature 5: Langmuir, Vol. 2007, No. 23, p. 3062-3066
Non Patent Literature 6: Dai 4 han Jikkenkagakukouza 5 NMR (Experimental Chemistry Course of Study 5 NMR, fourth edition), p. 229 (1991)

**Summary of Invention**

**Technical Problem**

An object of the present invention is to provide a hollow particle in which aggregation is little, a process for producing the hollow particle, and use of the hollow particle.

**Solution to Problem**

The present invention provides hollow particles comprising a silicon compound, wherein an average particle size is 5 to 150 nm, a thickness of the shell is 1 to 25 nm, and a ratio ($I_{Q2}/I_{Q4}$) of an integrated intensity ($I_{Q2}$) of a peak ($Q^2$) attributed to silicon in which the number of bridging oxygen is 2 to an integrated intensity ($I_{Q4}$) of a peak ($Q^4$) attributed to silicon in which the number of bridging oxygen is 4 in solid-state NMR ($^{29}$Si/MAS) measurement ("also referred to as solid-state $^{29}$Si-MAS-NMR measurement.") is not less than 0.25 and not more than 1.0.

As the conventional hollow particles, for example, in Patent Literatures 2 and 3, the hollow particles obtained from core-shell particles in which a composite product of silica and other inorganic compound is used as the core particle are described. In these hollow particles, however, there is concern that dispersion of the hollow particles in a solvent may not be sufficient in the case where the hollow particles are formed into a slurry, because the degree of condensation of silica in the shell is high. For example, in Patent Literature 3, although silica based fine particles are disclosed wherein a ratio ($S_B/S_c$) of a specific surface area ($S_B$) measured by a BET method to a specific surface area ($S_c$) represented by a following expression is within the range of 1.1 to 5.0; however, the above concern is present because in the fines particles, the degree of condensation of silica is relatively high:

$$S_c(m^2/g) = 6000/D_p(nm) \cdot \rho$$

(wherein Dp: average particle size of the silica based fine particles (nm), and p: density (g/cm$^3$).)

Contrary to this, the present inventors found out that aggregation is little and dispersion in a solvent is good in the hollow particles in which the degree of condensation of silica in the hollow particles favorably corresponds to the above-mentioned ratio ($I_{Q2}/I_{Q4}$) and the above-mentioned ratio is within the above-mentioned range. Namely, in the hollow particles according to the present invention, because the above-mentioned ratio is within the above-mentioned range, the degree of condensation of silica in the silicon compound contained as a component of the shell is sufficiently low, aggregation is little, and dispersibility in a solvent is good.

Moreover, in the hollow particles according to the present invention, because the shell contains the silicon compound, and the average particle size thereof is 5 to 150 nm, transparency, fluidity, and filling properties are higher. Moreover, because the thickness of the shell is 1 to 35 nm, mechanical strength is higher. For this reason, the hollow particles according to the present invention can be suitably used as a low refractive index filling material in optical application, for example.

The present invention also provides hollow particles, wherein a ratio ($S_B/S_c$) of a specific surface area ($S_B$) measured by a BET method to a specific surface area ($S_c$) represented by a following expression is more than 5.0 and not more than 100:

$$S_c(m^2/g) = 6000/D_p(nm) \cdot \rho$$

(wherein Dp: average particle size (nm) of the above-mentioned hollow particles, and r: density (g/cm³) of a component that forms the shell of the above-mentioned hollow particles.)

In such hollow particles, because the degree of condensation of silica is low, aggregation is little, and dispersibility in a solvent is good.

In the hollow particles according to the present invention, it is preferable that the surfaces thereof are treated by a silane coupling agent. Thereby, in the hollow particles according to the present invention, dispersibility is much better.

The present invention also provides a process for producing the described hollow particles, the process comprising:

to a solution containing organic polymer-silicon compound composite particles each including a core composed of an organic polymer containing polyvinyl acetate as a principal component and a shell composed of a silicon compound, not less than 95% by mass of a solvent being water,
adding 1.0 to 50 parts by mass of nitric acid and 0.8 to 40 parts by mass of hydrogen peroxide based on 1.0 part by mass of the above-mentioned organic polymer-silicon compound composite particles in the above-mentioned solution; and subsequently, keeping the solution at a high temperature of 150 to 250°C and at high pressure to decompose the above-mentioned organic polymer by oxidation.

As described above, in Patent Literatures 4 and 5, the processes using calcium carbonate as the core particle have been proposed, and in Patent Literature 6, the process using zinc oxide as the core particle has been proposed. In these processes, however, calcium carbonate and zinc oxide used as the core particle is crystalline, and has crystal habit. For this reason, the crystal habit is unintendedly reflected in the composite particles whose core particle is coated with a silicon compound and the hollow particles obtained by removing the core particle from the composite particles; thus, spherical hollow particles cannot be obtained. If the hollow particles are not spherical, there is concern that fluidity and filling properties are insufficient in the case where the hollow particles are used as a filling material, and the properties intrinsic to the hollow particles such as low refractive index, low dielectric constant, and high porosity may not be sufficiently demonstrated.

Further, as described above, in Patent Literatures 1 and 7, the processes for producing hollow particles according to the organic templating method have been proposed, and the process are described in which core-shell particles are removed by heating and drying the core-shell particles to thermally decompose or burn organic polymer particles, thereby to obtain the hollow particles. A problem of these production processes, however, is that heating at a high temperature is needed in order to thermally decompose or burn the organic polymer particles, the particles adhere to each other by the heating at a high temperature, and strong aggregates are unintendedly produced. Moreover, in Non Patent Literature 1, as described above, the process for obtaining hollow particles in which aggregates are little has been examined; however, a problem of this process is that because a large amount of a salt is added to the slurry containing the core-shell particles when the above-mentioned salt solution is produced, the core-shell particles that are a hydrophilic colloid are unintendedly aggregated by salting-out, and an effect of preventing aggregation cannot be sufficiently obtained.

Contrary to this, the process for producing hollow particles according to the present invention can easily remove the core while the shape of the shell of the above-mentioned organic polymer-silicon compound composite particle is kept by decomposing the above-mentioned organic polymer by oxidation on the above-mentioned predetermined conditions. For this reason, according to the process for producing hollow particles according to the present invention, the hollow particles having approximately the same uniform shape as that of the shell of the above-mentioned organic polymer-silicon compound composite particle can be produced. For example, if the above-mentioned organic polymer-silicon compound composite particles are spherical, the hollow particles having the spherical uniform particle shape can be produced. Moreover, in the process for producing hollow particles according to the present invention, because the hollow particles can be produced without heating the above-mentioned organic polymer-silicon compound composite particles in a dry state, the hollow particles can be produced with hardly causing aggregation. Further, according to the process for producing hollow particles according to the present invention, because the degree of condensation of silica in the silicon compound contained in the shell of the organic polymer-silicon compound composite particles can be kept low, the hollow particles in which aggregation is little and dispersibility in a solvent is good can be produced.

As a method for decomposing a sample for quantitative analysis of cadmium or lead in an organic polymer, a wet ashing method using sulfuric acid and hydrogen peroxide, a microwave heating decomposition method using nitric acid and hydrogen peroxide, and the like are known (Non Patent Literature 4). Whether this process can decompose the organic polymer coated with an inorganic oxide, however, is not described or suggested.

In the process for producing hollow particles according to the present invention, it is preferable that the above-mentioned heating at the time of keeping at a high temperature and high pressure is microwave heating. If the above-mentioned high temperature and high pressure is high temperature and high pressure by a microwave, the degree of condensation of silica in the silicon compound contained in the shell can be kept much lower.

The present invention also provides a slurry containing the above-mentioned hollow particles and an organic solvent, wherein a content of the above-mentioned hollow particles is 5 to 40% by mass, a total content of the above-mentioned hollow particles and the above-mentioned organic solvent is 90 to 99.9% by mass, and the remainder is mainly water. Such a slurry contains the above-mentioned predetermined content of the above-mentioned hollow particles and organic solvent; thus, a slurry in the above-mentioned hollow particles favorably dispersed is obtained. The slurry according to the present invention can be suitably used, for example, for production of a coating material for formation of a coating film.

In the slurry according to the present invention, it is preferable that the above-mentioned organic solvent is an alcohol that is liquid at 25°C and/or a ketone that is liquid at 25°C. Such a slurry can be used more suitably for production of a coating material for formation of a coating film because dispersibility of the hollow particles is good, and compatibility with a variety of components contained in the coating material for formation of a coating film (for example, a matrix for formation of a coating film) is good.

The present invention also provides a coating material for formation of a transparent coating film, the coating material prepared by comprising the above-mentioned hollow particles and a matrix for formation of a coating film. According to such a coating material for formation of a transparent coating film, because in the above-mentioned hollow particles, aggregation is little and dispersibility in a solvent is good, a coating film in which the hollow particles are uniformly dispersed can easily be formed.

The present invention further provides a substrate with a coating film, wherein a coating film prepared by comprising hollow particles and a matrix for formation of a coating film is formed alone or with other coating film on a surface of the substrate. The substrate with a coating film is provided. Such a substrate with a coating film can demonstrate high anti-reflection properties by including the coating film containing the hollow particles according to the present invention.

## Advantageous Effects of Invention

The present invention can provide a powder composed of fine hollow particles in which aggregation is little, a process for producing the hollow particles, and use of the hollow particles.

## Description of Embodiments

Hereinafter, suitable embodiments according to the present invention will be described.

(Hollow particles)

The hollow particles according to the present embodiment are the hollow particles containing a silicon compound as the component of the shell, and satisfy the conditions (A) and/or (B) below.

(A) The ratio ($I_{Q2}/I_{Q4}$) of an integrated intensity ($I_{Q2}$) of a peak ($Q^2$) attributed to silicon in which the number of bridging oxygen is 2 to an integrated intensity ($I_{Q4}$) of a peak ($Q^4$) attributed to silicon in which the number of bridging oxygen is 4 in solid-state $^{29}$Si-MAS-NMR measurement of the component of the shell is not less than 0.25 and not more than 1.0.

(B) The ratio ($S_B/S_c$) of the specific surface area ($S_B$) measured by a BET method to the specific surface area ($S_c$) represented by the following expression (i) is more than 5.0 and not more than 100:

$$S_c(m^2/g) = 6000/D_p(nm) \cdot \rho ...(i)$$

[wherein $D_p$ represents the average particle size (nm) of the above-mentioned hollow particles, and r represents the density (g/cm$^3$) of the component that forms the shell of the above-mentioned hollow particles.]

The ratio ($I_{Q2}/I_{Q4}$) corresponds to the condensation rate of silica well, and the condensation rate of silica is lower as the ratio ($I_{Q2}/I_{Q4}$) is higher. In the hollow particles in which the ratio ($I_{Q2}/I_{Q4}$) is within the above-mentioned range, the degree of condensation of silica in the silicon compound contained as the component of the shell is sufficiently low, aggregation is little, and dispersibility in a solvent is good. A process for measuring the number of bridging oxygen for silicon (Si) in a silicon compound such as silica by solid-state $^{29}$Si-MAS-NMR can be performed according to the method described in Non Patent Literature 6.

Moreover, the ratio ($S_B/S_C$) also corresponds to the condensation rate of silica well, and the condensation rate of silica is lower as the ratio ($S_B/S_C$) is higher. In the hollow particles in which the ratio ($S_B/S_C$) is within the above-mentioned range, the degree of condensation of silica in the silicon compound contained as the component of the shell is sufficiently low, aggregation is little, and dispersibility in a solvent is good.

If the condensation rate of silica is excessively high, a problem is that dispersibility in a solvent may be reduced; if the degree of condensation is excessively low, a problem is that gelation may be easily caused.

It is preferable that the average particle size of the hollow particles is 5 to 150 nm, and it is preferable that the thickness of the shell is 1 to 25 nm. Such hollow particles have high transparency, fluidity, and filling properties because the shell contains the silicon compound and the average particle size is 5 to 150 nm. Moreover, because the thickness of the shell is 1 to 35 nm, mechanical strength is high. Such hollow particles can be suitably used as a low refractive index filling material in optical application, for example.

The average particle size and thickness of the shell of the hollow particles each can be measured using a transmission electron microscope (TEM). Specifically, with respect to the average particle size of the hollow particles, diameters of 100 or more (for example, 100) particle images of the hollow particles obtained using a transmission electron microscope are measured, and the average value is defined as the average particle size. Moreover, when the hollow particles are observed by the TEM, it can be checked for the presence/absence of hollowness. Here, with respect to the diameter of the particle whose particle image is in a shape other than circular, the geometric mean value of a long diameter and a short diameter is considered as the diameter of the particle in the case where the shape is elliptical, and the geometric mean value of the longest diameter and the shortest diameter is considered as the diameter of the particle in the case where the shape is amorphous other than circular or elliptical.

The thickness of the shell of the hollow particle is defined as a value obtained by subtracting the diameter of the hollow portion from the diameter of the hollow particle and dividing the difference by 2. Presence/absence of aggregation is checked by comparing the particle sizes before and after the hollowing treatment, the particle sizes being measured by a dynamic light scattering method in which conditions such as the concentration of the solid content, the composition of the solvent, and the measurement temperature are the same. The particle size is expressed in diameter, unless otherwise specified.

The "density (g/cm$^3$) of the component that forms the shell of the hollow particle" designates the mass per unit volume of the component that forms the shell of the hollow particle; for example, in the case where the shell is composed of silica, the density is 2.2 g/cm$^3$.

It is preferable that the average circularity of the hollow particle is 0.90 to 1.00, and it is more preferable that the average circularity is 0.95 to 1.00. At an average circularity smaller than the above-mentioned range, properties intrinsic to the particles may not be able to be sufficiently demonstrated. The hollow particles whose average circularity is within the above-mentioned range can be produced by using the composite particles whose average circularity is within the above-mentioned range as the composite particles in the process for producing hollow particles described later. The average circularity of the hollow particle can be measured by the same method as that in the average circularity of the composite particles described above.

(Process for producing hollow particles)

The process for producing hollow particles according to the present embodiment comprises: adding 1.0 to 50 parts by mass of nitric acid and 0.8 to 40 parts by mass of hydrogen peroxide based on 1.0 part by mass of the organic polymer-silicon compound composite particles in a solution to the solution containing organic polymer-silicon compound composite particles each including a core composed of an organic polymer containing polyvinyl acetate as a principal component and a shell composed of a silicon compound, not less than 95% by mass of a solvent being water; and subsequently, and subsequently keeping the solution at a high temperature of 150 to 250°C and at high pressure to decompose the organic polymer by oxidation.

Namely, the process for producing hollow particles according to the present embodiment comprises a decomposing step of keeping the solution containing the composite particles including the core containing an organic polymer containing polyvinyl acetate as a principal component and the shell composed of a silicon compound and 1.0 to 50 parts by mass of sulfuric acid based on 1 part by mass of the composite particles and 0.8 to 40 parts by mass of hydrogen peroxide based on 1 part by mass of the composite particles, in which not less than 95% by mass of a solvent is water at 150 to 250°C, at a high temperature and high pressure to hydrolyze polyvinyl acetate. Here, it is preferable that the core is an organic polymer particle.

The "organic polymer containing polyvinyl acetate as a principal component" means that the organic polymer is mainly composed of polyvinyl acetate or that monomeric units that form the organic polymer are mainly composed of vinyl acetate. It is preferable that the proportion of polyvinyl acetate to the organic polymer is not less than 60% by mass, and it is more preferable that the proportion is not less than 80% by mass. Moreover, it is preferable that the proportion of vinyl acetate to the monomeric units that form the organic polymer is not less than 60% by mass, and it is more preferable that the proportion is not less than 80% by mass. Thereby, removal of the core is easier.

By decomposing the polymer by oxidation on the above-mentioned predetermined conditions at the decomposing step, the process for producing hollow particles according to the present embodiment can easily remove the core while the shape of the shell of the composite particle is kept. For this reason, the hollow particles having approximately the same uniform shape as that of the shell of the composite particle can be produced. For example, if the composite particles are spherical, the hollow particles having the spherical uniform particle shape can be produced. Moreover, in the process for producing hollow particles according to the present embodiment, the hollow particles can be produced without heating the composite particles in a dry state, and the hollow particles can be produced with hardly causing aggregation. Further, according to the process for producing hollow particles according to the present embodiment, because the degree of condensation of silica in the silicon compound contained in the shell of the composite particles can be kept low, the hollow particles in which aggregation is little and dispersibility in a solvent is good can be produced.

As the composite particles, the organic polymer-silicon compound composite particles according to the present embodiment or organic polymer-silicon compound composite particles produced by the process for producing organic polymer-silicon compound composite particles according to the present embodiment described above are suitable.

The composite particles having a core-shell type structure are formed into hollow particles by decomposing the organic polymer that is the component of the core to remove the core. In order to remove the core without the composite particles being aggregated, it is preferable that using a liquid oxidizing agent, the organic polymer is decomposed without drying the composite particles. Moreover, in the case where the composite particles that are the raw material are dispersed in the solution, it is preferable that the decomposing step is performed while the dispersion state is kept (without drying the composite particles).

In order to suppress aggregation of the particles, it is preferable that the organic polymer contained in the core is decomposed by oxidation as easily as possible. For this reason, in the process for producing hollow particles according to the present embodiment, the core containing the organic polymer containing polyvinyl acetate as a principal component is used. Moreover, as the liquid oxidizing agent, those whose valence number (ionic strength) is smaller as possible are preferable not to cause aggregation (salting-out) of the particles. For this reason, in the process for producing hollow particles according to the present embodiment, an aqueous solution containing monovalent nitric acid and hydrogen peroxide is used. By nitric acid alone or hydrogen peroxide alone, no sufficient effect of decomposition by oxidation is obtained.

In the case where the composite particles are dispersed in a solution and alcohol is contained in the solution, if the composite particles are heated as they are in the aqueous solution containing nitric acid and hydrogen peroxide, decomposition of the alcohol by oxidation may occur, and the liquid oxidizing agent may be wasted. Then, it is preferable that before the decomposing step, replacement of a solvent is performed in advance such that not less than 95% by mass may be water in the solvent of the solution in which the composite particles are dispersed. Examples of the method for replacing a solvent include cross flow type ultrafiltration, distillation, or centrifugation, for example.

Decomposition by oxidation can be performed by the following process, for example. First, a nitric acid aqueous solution and a hydrogen peroxide aqueous solution are added to the solution containing the composite particles, and then the solution is heated. As the nitric acid aqueous solution, commercially available nitric acid (concentration of 60% by mass) is suitably used; as the hydrogen peroxide aqueous solution, a commercially available hydrogen peroxide solution (concentration of 30% by mass) is suitably used. These are added such that nitric acid may be 1.0 to 50 parts by mass and hydrogen peroxide may be 0.8 to 40 parts by mass based on 1 part by mass of the composite particles. If the amounts of these to be added are small, decomposition by oxidation may be insufficient; if the amounts of these to be added are large, an excessive oxidizing agent unintendedly remains, and removal thereof takes enormous efforts.

Next, the mixed aqueous solution of the composite particles, nitric acid, and hydrogen peroxide is kept at a high temperature and high pressure, thereby to perform decomposition by oxidation. It is preferable that the temperature to be kept is 150 to 250°C, and it is more preferable that the temperature is 160 to 220°C. The method for heating may be external heating using a heater, steam, an oil bath, or the like; however, in order to keep the degree of condensation of silica described above low, microwave heating is particularly preferable. Moreover, at normal pressure, water is unintendedly vaporized at the high temperature, and therefore, the aqueous solution is kept at high pressure. The pressure to be kept of 3 or more MPa is preferable in the case where the temperature to be kept is 150 to 220°C, and the pressure to be kept of 5 or more MPa is preferable in the case where the temperature is 220 to 250°C. Although the keeping time depends on the thickness of the shell made of the silicon compound in the composite particles and the amount of the particle, several 10 minutes to several hours are preferable.

The reaction solution after decomposition by oxidation is cooled to a temperature of not less than 100°C, and is decompressed, and then the reaction solution is recovered. In order to remove nitric acid and hydrogen peroxide that remain in the solution, washing by water is repeated until the washing liquid becomes neutral. Moreover, when necessary, a water-soluble basic substance such as ammonia may be added to accelerate neutralization. By this process, the water slurry containing the hollow particles is obtained.

The hollow particles according to the present embodiment are a particle having a shell (outer shell) and a single pore (hollow space) inside thereof. Because the hollow particles have a low refractive index, a low dielectric constant, and a high porosity, applications to filling materials such as anti-reflective materials, low dielectric constant materials, and insulating materials, and carriers for a drug delivery system or the like can be considered; however, in most of the applications, it is necessary that the particles are dispersed. In the powder composed of a group of hollow particles whose size is several to several tens of nanometers, aggregation is remarkable in a dry state and the dispersed particles are difficult to obtain; for this reason, the powder needs to be made into a slurry state in which dispersibility is relatively good. Moreover, there is a case where an organic matrix is used as a disperse medium; in this case, an organic solvent is suitable for the solvent of the slurry rather than water.

The slurry using an organic solvent as the solvent and containing the hollow particles is obtained, for example, by replacing the solvent of the water slurry containing the hollow particles i.e., water by an organic solvent using a process such as cross flow ultrafiltration. Here, if alcohol is used as the organic solvent, replacement of water is favorably progressed. The slurry in which the hollow particles are dispersed in an organic solvent other than alcohol can be suitably obtained, for example, by replacing the above-mentioned solvent of the water slurry by alcohol, and subsequently further replacing the alcohol by a desired organic solvent.

As a method for further improving dispersibility of the hollow particles in the slurry, dispersion by a homogenizer or wet jet mill can be performed. As a homogenizer apparatus, a stirring type (made by Mizuho Industrial Co., Ltd., or made by M Technique Co., Ltd., [trade name Clearmix]) or an ultrasonic type (made by Branson Ultrasonics Corporation) or the like can be used; as a wet jet mill apparatus, an Altimizer and a Star Burst (these are made by Sugino Machine Limited), a Nano Jet Pul (made by Jokoh Co., Ltd.), a Nano Maker (made by Advanced Nano Technology Co., Ltd.) or a Microfluidizer (made by Microfluidics International Corporation) or the like can be used.

Moreover, as a method for improving dispersibility of the hollow particles in the organic solvent, separately from the above-mentioned dispersion or in combination with the above-mentioned dispersion, a method for coating the surfaces of the particles with a silane coupling agent can be used.

It is preferable that in the slurry in which the hollow particles are dispersed in the organic solvent, the content of the hollow particles is 5 to 40% by mass, and it is more preferable that the content is 10 to 30% by mass. It is preferable that the total content of the hollow particles and organic solvent in the slurry is 90 to 99.9% by mass, and it is more preferable that the total content is 95 to 99.9% by mass.

As the organic solvent, alcohols that are liquid at 25°C, which is the operating temperature, such as methanol, ethanol, normal propanol, isopropanol, normal butanol, isobutanol, and tertiary butanol and ketones that are liquid at 25°C such as methyl ethyl ketone, diethyl ketone, and methyl isobutyl ketone are suitable.

The slurry in which the hollow particles are dispersed in alcohol is obtained by replacing the solvent (water) of the water slurry containing the hollow particles by alcohol using a method such as cross flow ultrafiltration. At this time, in the case where the dispersion state is poor, dispersion may be performed by a homogenizer or wet jet mill.

The slurry in which the hollow particles are dispersed in ketone is obtained by dispersing the slurry obtained as above in which the hollow particles are dispersed in alcohol by a wet jet mill when necessary, further coating the surfaces of the particles by a silane coupling agent, and then, replacing the solvent by ketone using a method such as cross flow ultrafiltration or distillation. As the silane coupling agent, epoxysilane based coupling agents, methacryloxysilane based coupling agents, and the like are suitably used.

As the slurry according to the present embodiment, the slurry containing the hollow particles and the organic solvent is preferable, in which the content of the hollow particles is 5 to 40% by mass, and the total content of the hollow particles and the organic solvent is 90 to 99.9% by mass, and water is contained as the remainder. Such a slurry contains the hollow particles and the organic solvent at the above-mentioned predetermined contents, thereby resulting in a slurry in which the hollow particles are dispersed well. Such a slurry can be suitably used for production of a coating material for formation of a coating film, for example.

It is preferable that the organic solvent contains an alcohol that is liquid at 25°C and/or a ketone that is liquid at 25°C. In such a slurry, dispersibility of the hollow particles is good, and compatibility with a variety of components contained in a coating material for formation of a coating film (for example, a matrix for formation of a coating film) is good; accordingly, the slurry can be more suitably used for production of a coating material for formation of a coating film.

In the hollow particles according to the present embodiment, aggregation is little, and dispersibility in a solvent is good. For this reason, the coating material for formation of a coating film containing the hollow particles and a matrix for formation of a coating film can easily form a coating film in which the hollow particles are uniformly dispersed.

Moreover, by using a matrix whose transparency is good as the matrix for formation of a coating film, a coating material for formation of a coating film whose transparency is good can be prepared.

In the hollow particles according to the present embodiment, the refractive index is low, and the refractive index is also low in the coating film containing the hollow particles; accordingly, the above-mentioned coating material for formation of a coating film is suitable as a coating material for anti-reflection.

Moreover, a substrate with a coating film including a substrate and a coating film containing the hollow particles and a matrix for formation of a coating film and formed on the substrate includes a coating film containing the hollow particles according to the present embodiment, thereby to be capable of demonstrating high anti-reflection properties.

In the case where the hollow particles according to the present invention are used as a low refractive index filling material in optical application, it is preferable that the average particle size of the particles is 5 to 150 nm, and the thickness of the shell made of the silicon compound is 1 to 25 nm.

Above, the suitable embodiment according to the present invention has been described, but the present invention will not be limited to the above-mentioned embodiment.

**Examples**

Hereinafter, the present invention will be described more in detail using Examples, but the present invention will not be limited to the Examples.

(Example 1-1)

<Formation of organic polymer particles>

200 g of distilled water and 1 g of hexadecyltrimethylammonium bromide (C16TAB) were added to a separable flask with a volume of 300 mL, and stirred while gaseous nitrogen was bubbled. While bubbling and stirring were continued, 10 g of vinyl acetate was added at a point of time when 30 minutes passed; then, heating was started. At a point of time when the temperature of water reached 50°C, bubbling was stopped; 0.5 g of 2,2'-azobis(2-methylpropionamidine) dihydrochloride (AIBA) was dissolved in 10 g of distilled water and added. The temperature of water was kept at 50°C for 60 minutes while stirring was continued; then, cooling to room temperature was performed to obtain an emulsion containing organic polymer particles.

<Formation of composite particles>

40 g of the obtained emulsion was taken out, and 150 g of distilled water was added to this to prepare a solution containing 1% by mass of the organic polymer particles; then, a small amount of acetic acid was dropped to adjust the pH at pH = 4. Next, using a zeta potential measurement apparatus (made by Sysmex Corporation, Zetasizer Nano-ZS), the zeta potential of the organic polymer particles in the solution was measured to be 52 mV. Then, while the temperature of the solution was kept at 40°C and the solution was stirred, 8 g of tetraethoxysilane (TEOS) was added thereto over 8 hours. Even after termination of addition, the solution was kept at 40°C for 5 hours while stirring was continued; then, the solution was cooled to room temperature, and coating with the silicon compound was terminated to obtain a solution containing composite particles. The solution after cooling was dropped onto a net (micro grid) for capturing a micro sample, dried, and then used for observation by a transmission electron microscope (TEM). Using a transmission electron microscope (made by JEOL Ltd., 2000FX), observation by the TEM was performed on the conditions of an accelerating voltage of 200 kV and an observation magnification of 200,000 times.

<Evaluation>

By observation by the TEM, a particle image having a contrast of two parts in which the inside of the particle image was circular and bright and the outside thereof was annular and dark was obtained, and production of the composite particles comprising the core composed of vinyl acetate and the shell composed of the silicon compound was found. With respect to 100 particle images, the outer diameter of the inner bright particle and the outer diameter of the dark annular part in the outside thereof were measured; the average value of the outer diameter of the inner bright particle was defined as the diameter of the organic polymer particle, and the average value of the outer diameter of the dark annular part in the outside thereof was defined as the diameter of the composite particle; the value obtained by subtracting the diameter of the organic polymer particle from the diameter of the composite particle and dividing the difference by 2 was defined as the thickness of the shell of the composite particle; then, the diameter of the organic polymer particle was 37 nm, the diameter of the composite particle was 45 nm, and the thickness of the shell was 4 nm. A small amount of the solution immediately before the raw material for the silicon compound (TEOS) was added and a small amount of the solution immediately after coating with the silicon compound was terminated were taken, and an amount of change in the average particle size of the particles contained in the solution was measured by a dynamic light scattering apparatus (made by HORIBA, Ltd., LB-550); then, the amount of change was +9 nm ("+" designates an increase in the result of the solution immediately after termination of coating from the result of the solution "immediately before" the addition of the raw material for the silicon compound, while "-" designates a decrease therein. The same applies hereinafter.), and no remarkable aggregation of the particles accompanied by coating was caused.

(Examples 1-2 to 1-6, Comparative Examples 1-1 and 1-2)

Composite particles were produced and evaluated in the same manner as in Example 1-1 except that the raw material to be used and part of the conditions were changed. The production conditions were shown in Table 1 and Table 2, and the evaluation results were shown in Table 3.

(Example 1-7)

In the same manner as in Example 1-1, distilled water, C16TAB, vinyl acetate, and AIBA were added to a separable flask, the temperature of water was kept at 50°C for 60 minutes while stirring was continued, and then, cooling to room temperature was performed. Subsequently, 1 g of (3-)glycidoxypropyl-trimethoxysilane (GPS) that was an epoxysilane based coupling agent was added, and stirred for 30 minutes; the temperature was raised to 40°C while stirring was continued, and kept for 60 minutes to perform a surface treatment by a silane coupling agent; then, cooling to room temperature was performed to obtain an emulsion containing organic polymer particles.

40 g of the obtained emulsion was taken out; in the same manner as in Example 1-1, distilled water and acetic acid were added to adjust the pH, and the zeta potential measurement, addition of TEOS, measurement of the particle size by the TEM, and measurement of the amount of change in the particle size by the dynamic light scattering apparatus were performed. The production conditions were shown in Table 1 and Table 2, and the evaluation results were shown in Table 3.

(Example 1-8)

After an emulsion was produced in the same manner as in Example 1-1, 40 g of the obtained emulsion was taken out; distilled water and acetic acid were added to the emulsion to adjust the pH, and the zeta potential was measured; then, 0.02 g of ammonium fluoride ($NH_4F$) was add to the solution to introduce fluoride ions ($F^-$). Subsequently, also in the same manner as in Example 1-1, addition of TEOS, measurement of the particle size by the TEM, and measurement of the amount of change in the particle size by the dynamic light scattering apparatus were performed. The production conditions were shown in Table 1 and Table 2, and the evaluation results were shown in Table 3.

(Comparative Example 1-1)

An emulsion was produced in the same manner as in Example 1-1 except that 0.5 g of potassium persulfate (KPS) was used as the polymerization initiator instead of 0.5 g of AIBA. The zeta potential was 5 mV after distilled water and acetic acid were added to the taken-out emulsion to adjust the pH. Subsequently, TEOS was added and measurement of the particle size by the TEM was performed also in the same manner as in Example 1-1; then, no particle was observed, and no composite particle comprising an organic polymer core-silicon compound shell was formed.

(Comparative Example 1-2)

An emulsion was produced in the same manner as in Example 1-1 except that 0.8 g of sodium dodecyl sulfate (SDS) was used as the emulsifier instead of 1 g of C16TAB. The zeta potential after distilled water and acetic acid were added to the taken-out emulsion to adjust the pH was -25 mV (negative). Subsequently, TEOS was added and measurement of the particle size by the TEM was performed also in the same manner as in Example 1-1; then, no particle was observed, and no composite particle comprising an organic polymer core-silicon compound shell was formed.

The materials used, which are written in abbreviated form in Table 1 and Table 2, are shown below. Moreover, "h" designates "hours" in Table 2.

$VA_C$ = vinyl acetate
MMA = methyl methacrylate
MA = methacrylic acid
C16TAB = (n-)hexadecyltrimethylammonium bromide
C12TAC = (n-)dodecyltrimethylammonium chloride
SDS = sodium dodecyl sulfate
AIBA = 2,2'-azobis(2-methylpropionamidine) dihydrochloride

VA-067 = 2,2-azobis(1-imino-1-pyrrolidino-2-methylpropane) dihydrochloride
KPS = potassium persulfate
TEOS = tetraethoxysilane
TMOS = tetramethoxysilane
GPS = (3-)glycidoxypropyltrimethoxysilane
$NH_4F$ = ammonium fluoride

[Table 1]

| | Formation of organic polymer particles | | | | | | | |
| | Raw material monomer | Distilled water | Surfactant | Polymerization initiator | Amount of water for dissolving polymerization initiator | Silane coupling agent | Emulsion polymerization | |
| | | | | | | | Temperature | Time |
|---|---|---|---|---|---|---|---|---|
| Example 1-1 | VAc 10 g | 200 g | C16TAB 1 g | AIBA 0.5 g | 10 g | - | 50°C | 60 minutes |
| Example 1-2 | VAc 10 g | 200 g | C12TAC 10 g | AIBA 2 g | 20 g | - | 40°C | 90 minutes |
| Example 1-3 | VAc 20 g | 200 g | C16TAB 1 g | AIBA 0.5 g | 10 g | - | 50°C | 60 minutes |
| Example 1-4 | VAc 1.6 g MMA 0.4 g | 200 g | C16TAB 0.2 g | AIBA 0.1 g | 2 g | - | 60°C | 60 minutes |
| Example 1-5 | VAc8g MA2g | 200 g | C16TAB 1 g | VA-067 0.7 g | 10 g | - | 70°C | 60 minutes |
| Example 1-6 | VAc 6 g MMA 2 g MA 2 g | 200 g | C16TAB 1 g | VA-067 0.7 g | 10 g | - | 65°C | 60 minutes |
| Example 1-7 | VAc 10 g | 200 g | C16TAB 1 g | AIBA 0.5 g | 10 g | GPS 1 g | 50°C | 60 minutes |
| Example 1-8 | VAc 10 g | 200 g | C16TAB 1 g | AIBA 0.5 g | 10 g | - | 50°C | 60 minutes |
| Comparative Example 1-1 | VAc 10 g | 200 g | C16TAB 1 g | KPS 0.5 g | 10 g | - | 50°C | 60 minutes |
| Comparative Example 1-2 | VAc 10 g | 200 g | SDS 0.8 g | AIBA 0.5 g | 10 g | - | 50°C | 60 minutes |

[Table 2]

| | Formation of composite particles | | | | | | | |
|---|---|---|---|---|---|---|---|---|
| | Amount of emulsion to be taken out | Amount of distilled water to be added | Concentration of organic polymer particles | pH adjuster (pH after adjustment) | Fluoride ions | Raw material for silicon compound | Temperature and time to add raw material | Temperature and time to be kept after addition of raw material |
| Example 1-1 | 40 g | 150 g | 1 % by mass | Acetic acid (4) | - | TEOS 8 g | 40°C, 8h | 40°C, 5h |
| Example 1-2 | 40 g | 150 g | 1 % by mass | Nitric acid (3) | - | TMOS 10 g | 30°C, 8h | 30°C, 3h |
| Example 1-3 | 40 g | 150 g | 2 % by mass | Acetic acid (5) | - | TEOS 8 g | 40°C, 25h | 40°C, 5h |
| Example 1-4 | 200 g | - | 1 % by mass | Acetic acid (4) | - | TEOS 8 g | 40°C, 8h | 40°C, 5h |
| Example 1-5 | 40 g | 150 g | 1 % by mass | Acetic acid (4) | - | TEOS 8 g | 40°C,8h | 40°C, 5h |
| Example 1-6 | 40 g | 150 g | 1 % by mass | Acetic acid (4) | - | TEOS 8 g | 40°C, 8h | 40°C, 5h |
| Example 1-7 | 40 g | 150 g | 1 % by mass | Acetic acid (4) | - | TEOS 8 g | 40°C, 8h | 40°C, 5h |
| Example 1-8 | 40 g | 150 g | 1 % by mass | Acetic acid (4) | $NH_4F$ 0.02 g | TEOS 8 g | 40°C, 8h | 40°C, 5h |
| Comparative Example 1-1 | 40 g | 150 g | 1 % by mass | Acetic acid (4) | - | TEOS 8 g | 40°C, 8h | 40°C, 5h |
| Comparative Example 1-2 | 40 g | 150 g | 1 % by mass | Acetic acid (4) | - | TEOS 8 g | 40°C, 8h | 40°C, 5h |

[Table 3]

| | Zeta potential after pH adjustment | Average particle size of organic polymer particle (TEM) | Average particle size of composite particle (TEM) | Thickness of shell (TEM) | Amount of change in average particle size before and after coating shell (dynamic light scattering method) |
|---|---|---|---|---|---|
| Example 1-1 | 52 mV | 37 nm | 45 nm | 4 nm | +9 nm |
| Example 1-2 | 31 mV | 10 nm | 14 nm | 2 nm | +4nm |
| Example 1-3 | 70 mV | 82 nm | 124 nm | 21 nm | +46 nm |
| Example 1-4 | 40 mV | 42 nm | 51 nm | 4.5 nm | +10 nm |
| Example 1-5 | 22 mV | 53 nm | 59 nm | 3 nm | +7 nm |
| Example 1-6 | 28 mV | 50 nm | 58 nm | 4 nm | +10 nm |
| Example 1-7 | 50 mV | 35 nm | 50 nm | 7.5 nm | +16 nm |
| Example 1-8 | 52 mV | 35 nm | 55 nm | 10 nm | +22 nm |
| Comparative Example 1-1 | 5 mV | - | - | - | - |
| Comparative Example 1-2 | -25 mV | - | - | - | - |

(Example 1-9)

10 mL of the solution containing the composite particles, which was obtained in Example 1-1, was taken out; 0.5 mL of nitric acid (65% by mass) and 2 mL of a hydrogen peroxide solution (30% by mass) were added to the solution; using a microwave processor (made by Milestone General K.K., ETHOS One), a treatment for applying pressure and heating at a temperature of 200°C and a pressure of 3 MPa for 10 minutes was performed. The sample after the treatment was repeatedly subjected to centrifugal sedimentation and washing by distilled water until the pH of the sample reached pH = 7 to remove nitric acid, and was then dried to obtain a power; with respect to the powder thus obtained, the content of carbon was measured using a carbon analyzer (carbon analyzer (made by LECO Corporation, IR-412); as a result, it was found that the content of carbon was 0.18% by mass, and most of the organic polymer of the core was removed by the treatment for applying pressure and heating. Further, when the powder was observed by the TEM, the hollow particles whose size was approximately the same as that of the original composite particle were found, and it was found that the hollow silicon compound particles were obtained by the treatment for applying pressure and heating.

(Comparative Example 1-3)

A solution containing composite particles was produced in the same manner as in Example 1-1 except that 9 g of butyl methacrylate and 1 g of butyl acrylate were used instead of 10 g of vinyl acetate in Example 1-1; 10 mL of this was taken out, and the treatment for applying pressure and heating was performed in the same manner as in Example 9, followed by washing and drying; the content of carbon in the powder thus obtained was measured; as a result, the content of carbon was 4.7% by mass, and the core of the organic polymer obtained from butyl methacrylate and butyl acrylate was not decomposed by the treatment for applying pressure and heating in Example 9.

(Comparative Example 1-4)

Using 10 g of methyl methacrylate instead of butyl methacrylate and butyl acrylate in Comparative Example 1-3, a solution containing composite particles was produced in the same manner, followed by the treatment for applying pressure and heating, washing, and drying; the content of carbon in the powder thus obtained was measured; as a result, the content of carbon was 6.2% by mass.

(Example 1-10, Comparative Example 1-5)

Using 1 L of a nitric acid acidic solution adjusted at a pH of 3 immediately after cooling a solution containing the composite particles obtained in Example 1-1, cross flow ultrafiltration was performed by a polysulfone hollow fiber filter with a molecular-weight cutoff of 1,000,000 (made by Spectrum Laboratories, Inc., KrosFlo). The solution containing the composite particles after filtration and the solution containing composite particles obtained in the same manner as in Comparative Example 1-4 (not subjected to ultrafiltration) were kept at room temperature. As a result, the solution after filtration did not cause gelation or aggregation even after one week, while the solution not subjected to filtration was gelled after one day.

According to the present invention, the powder composed of fine composite particles in which aggregation is little, and the slurry prepared by dispersing this are obtained.

(Example 2-1)

<Formation of organic polymer particles>

200 g of distilled water and 1 g of hexadecyltrimethylammonium bromide (C16TAB) were added to a separable flask with a volume of 300 mL, and stirring was performed while gaseous nitrogen was bubbled. While bubbling and stirring were continued, 10 g of vinyl acetate was added at a point of time when 30 minutes passed; then, heating was started. At a point of time when the temperature of water reached 50°C, bubbling was stopped; 0.5 g of 2,2'-azobis(2-methylpropionamidine) dihydrochloride (AIBA) was dissolved in 10 g of distilled water, and added. The temperature of water was kept at 50°C for 60 minutes while stirring was continued; then, cooling to room temperature was performed to obtain an emulsion containing organic polymer particles.

<Formation of composite particles>

40 g of the obtained emulsion was taken out, and 150 g of distilled water was added to this to prepare a solution containing 1% by mass of the organic polymer particles; then, a small amount of acetic acid was dropped to adjust the pH at pH = 4. Next, using a zeta potential measurement apparatus (made by Sysmex Corporation, Zetasizer Nano-ZS), the zeta potential of the organic polymer particles in the solution was measured to be 52 mV. Then, while the temperature of the solution was kept at 40°C and the solution was stirred, 8 g of tetraethoxysilane (TEOS) was added thereto over 8 hours. Even after termination of addition, the solution was kept at 40°C for 5 hours while stirring was continued; then, the solution was cooled to room temperature, and coating with the silicon compound was terminated to obtain a solution containing composite particles. The solution after cooling was dropped onto a net (micro grid) for capturing a micro sample, dried, and then used for observation by a transmission electron microscope (TEM). Using a transmission electron microscope (made by JEOL Ltd., 2000FX), observation by the TEM was performed on the conditions of an accelerating voltage of 200 kV and an observation magnification of 200,000 times.

By observation by the TEM, a particle image having a contrast of two parts in which the inside of the particle image was circular and bright and the outside thereof was annular and dark was obtained, and production of the composite particles comprising the core composed of vinyl acetate and the shell composed of the silicon compound was found. With respect to 100 particle images, the outer diameter of the inner bright particle and the outer diameter of the dark annular part in the outside thereof were measured; the average value of the outer diameter of the inner bright particle was defined as the diameter of the organic polymer particle, and the average value of the outer diameter of the dark annular part in the outside thereof was defined as the diameter of the composite particle; the value obtained by subtracting the diameter of the organic polymer particle from the diameter of the composite particle and dividing the difference by 2 was defined as the thickness of the shell of the composite particle; then, the diameter of the organic polymer particle was 37 nm, the diameter of the composite particle was 45 nm, and the thickness of the shell was 4 nm. A small amount of the solution immediately before the raw material for the silicon compound (TEOS) was added and a small amount of the solution immediately after coating with the silicon compound was terminated were taken, and an amount of change in the average particle size of the particles contained in the solution was measured by a dynamic light scattering apparatus (made by HORIBA, Ltd., LB-550); then, the amount of change was +9 nm ("+" designates an increase in the result of the solution immediately after termination of coating from the result of the solution "immediately before" the addition of the raw material for the silicon compound, while "-" designates a decrease therein. The same applies hereinafter.), and no remarkable aggregation of the particles accompanied by coating was caused.

<Removal of core>

Using a cross flow type ultrafiltration apparatus, a solution containing composite particles was subjected to replacement of the solvent by distilled water such that 95% of the solvent might be water. After the solution after replacement of the solvent was taken out and the solid content thereof was removed by a centrifuge, the amount of water in the solvent was measured using a gas chromatography-mass spectrometer (made by Agilent Technologies, Inc., 6890-5973 type). Next, approximately 150 g of the solution containing composite particles after replacement of the solvent was taken out, and the solvent of the solution was replaced by a nitric acid acidic solution at a pH of 3 by cross flow ultrafiltration using 600 g of a nitric acid acidic solution adjusted at a pH of 3. 10 g (approximately 10 mL) of this solution was taken out, 0.7 g (approximately 0.5 mL) of nitric acid (concentration of 60% by mass) and 1.1 g (approximately 1 mL) of a hydrogen peroxide solution (concentration of 30% by mass) were added (4.2 parts by mass of nitric acid and 3.3 parts by mass of hydrogen peroxide based on 1 part by mass of the composite particles (solid content)). This was subjected to a treatment for applying pressure and heating at a temperature of 200°C and a pressure of 3 MPa for 10 minutes using a microwave processor (made by Milestone General K.K., ETHOS One). The sample after the treatment was repeatedly subjected to centrifugal sedimentation and washing by distilled water until the pH of the sample reached pH = 7 to remove nitric acid. With respect to the powder obtained by drying part of the precipitate, the content of carbon was measured using a carbon analyzer (a carbon analyzer (made by LECO Corporation, IR-412)); as a result, it was found that the contend of carbon was 0.17% by mass, and most of the organic polymer of the core was removed by the treatment for applying pressure and heating.

Further, when the precipitate was dried and observed by the TEM, a particle image having a contrast of two parts in which the inside of the particle image was circular and bright and the outside thereof was annular and dark was obtained, and production of the hollow particles was found. With respect to 100 particle images, the outer diameter of the inner bright particle and the outer diameter of the dark annular part in the outside thereof were measured; the average value of the outer diameter of the inner bright particle was defined as the average diameter of the hollow space and the average value of the outer diameter of the dark annular part in the outside was defined as the average particle size of the hollow particle; the value obtained by subtracting the average diameter of the hollow space from the average particle size of the hollow particle and dividing the difference by 2 was defined as the thickness of the shell of the hollow particle; then, the average particle size of the hollow particle was 44 nm, and the thickness of the shell was 4 nm.

Because the precipitate was loosely aggregated by centrifugation, the precipitate was diluted by distilled water into a water slurry containing 10% by mass of the hollow particles as a solid content; then, the water slurry was dispersed by a wet jet mill(made by Sugino Machine Limited, Star Burst) at a discharging pressure of 245 MPa. The amount of change in the average particle size of the particles contained in the solution immediately after coating with the silicon compound was terminated and the average particle size of the particles contained in the solution immediately after dispersion by the wet jet mill was measured by a dynamic light scattering apparatus (made by HORIBA, Ltd., LB-550); then, the amount of change was $\pm 0$ nm, and no remarkable aggregation of the particles due to removal of the core was caused.

Next, using 0.5 g of the powder obtained by vacuum drying 10 g of the water slurry at room temperature, solid-state NMR ($^{29}$Si/MAS) measurement was performed (apparatus: Varian NMR System 400 WB, $^{1}$H resonance frequency: 400 MHz, measurement frequency: 79.56 MHz, measurement method: $^{29}$Si-CPMAS method, MAS rotation frequency: 6 kHz, the number of integration: 7000, and measurement temperature: room temperature). From the measurement result, the ratio ($I_{Q2}/I_{Q4}$) of an integrated intensity ($I_{Q2}$) of a peak ($Q^2$) attributed to silicon in which the number of bridging oxygen was 2 to an integrated intensity ($I_{Q4}$) of a peak ($Q^4$) attributed to silicon in which the number of bridging oxygen was 4 was calculated; the ratio was 0.41. Moreover, using 0.2 g of this powder, the specific surface area was determined by a BET single point method with an automatic specific surface area measurement apparatus (made by Micro Data Co., Ltd., Micro Sorp 4232II); the specific surface area was 390 $m^2$/g. When the ratio ($S_B/S_c$) of this value ($S_B$) and ($S_c$) to be determined by the following expression was calculated, the ratio was $S_B/S_c$ = 6.3:

$$S_c(m^2/g) = 6000/D_p(nm) \cdot \rho$$

wherein Dp is the average particle size of the hollow particles determined by observation by the TEM (44 nm), and r is the density of silica (2.2 $g/cm^3$).

The production conditions above were shown in Tables 4 to 6, and the evaluation results were shown in Table 7 and Table 8.

(Examples 2-2 to 2-6)

Production and evaluation were performed in the same manner as in Example 2-1 except that the raw material and part of the conditions used were changed, and the production conditions were shown in Tables 4 to 6, and the evaluation results were shown in Table 7 and Table 8.

(Example 2-7)

In the same manner as in Example 2-1, distilled water, C16TAB, vinyl acetate, and AIBA were added to a separable flask, and were kept at 50°C for 60 minutes while stirring was continued; then, cooling to room temperature was performed. Subsequently, 1 g of (3-)glycidoxypropyltrimethoxysilane (GPS) that was an epoxysilane based coupling agent was added, followed by stirring for 30 minutes; the temperature was raised to 40°C to be kept for 60 minutes while stirring was continued, and a surface treatment by a silane coupling agent was performed; then, cooling to room temperature was performed to obtain an emulsion containing organic polymer particles.
40 g of the obtained emulsion was taken out, and as in the same manner in Example 2-1, distilled water and acetic acid were added to adjust the pH, zeta potential measurement, addition of TEOS, measurement of the particle size by the TEM, and measurement of the amount of change in the particle size by the dynamic light scattering apparatus, removal of the core by the treatment for applying pressure and heating, measurement of the content of carbon after removal, solid-state NMR measurement, and specific surface area measurement were performed. The production conditions were shown in Tables 4 to 6, and the evaluation results were shown in Table 7 and Table 8.

(Example 2-8)

After an emulsion was produced in the same manner as in Example 2-1, 40 g of the obtained emulsion was taken out, distilled water and acetic acid were added to adjust the pH, and the zeta potential was measured; then, 0.02 g of ammonium fluoride ($NH_4F$) was added to the solution to introduce fluoride ions($F^-$). Even after that, in the same manner as in Example 1, addition of TEOS, measurement of the particle size by the TEM, measurement of the amount of change in the particle size by the dynamic light scattering apparatus, removal of the core by the treatment for applying pressure and heating, measurement of the content of carbon after removal, solid-state NMR measurement, and specific surface area measurement were performed. The production conditions were shown in Tables 4 to 6, and the evaluation results were shown in Table 7 and Table 8.

(Comparative Examples 2-1 to 2-3)

Composite particles were produced in the same manner as in Example 2-1, and the solvent of the solution was replaced by a nitric acid acidic solution at a pH of 3. Then, the treatment for applying pressure and heating, and removal of nitric acid by repeated centrifugal sedimentation and washing by distilled water were performed as in the same manner in Example 2-1 except that the amount of nitric acid to be added, the amount of a hydrogen peroxide solution, or the temperature was changed to the condition shown in Table 4. Subsequently, when the content of carbon was measured in the same manner as in Example 2-1, the content of carbon was 16.3 to 12.7% by mass; the organic polymer remained and hollowness was not produced. The production conditions were shown in Tables 4 to 6, and the evaluation results were shown in Table 7 and Table 8.

(Comparative Example 2-4)

A solution containing composite particles was produced in the same manner as in Example 2-1 except that 9 g of butyl methacrylate and 1 g of butyl acrylate were used instead of 10 g of vinyl acetate in Example 2-1; 10 g (approximately 10 mL) of this was taken out, and the treatment for applying pressure and heating, and removal of nitric acid by repeated centrifugal sedimentation and washing by distilled water were performed as in the same manner in Example 2-1. Even after that, when the content of carbon was measured in the same manner as in Example 2-1, the content of carbon was 4.7% by mass; the organic polymer remained and hollowness was not produced. The production conditions were shown in Tables 4 to 6, and the evaluation results were shown in Table 7 and Table 8.

(Comparative Example 2-5)

10 g of methyl methacrylate was used instead of butyl methacrylate and butyl acrylate in Comparative Example 2-4, and other conditions were the same as those in Comparative Example 2-4. When the content of carbon was measured, the content of carbon was 6.2% by mass; the organic polymer remained and hollowness was not produced. The production conditions were shown in Tables 4 to 6, and the evaluation results were shown in Table 7 and Table 8.
The materials used, which are written in abbreviated form in tables, are shown below. Moreover, "h" designates "hours" in Table 5.

VAc = vinyl acetate
MMA = methyl methacrylate

MA = methacrylic acid
BMA = butyl methacrylate
BA = butyl acrylate
C16TAB = (n-)hexadecyltrimethylammonium bromide
C12TAC = (n-)dodecyltrimethylammonium chloride
AIBA = 2,2'-azobis(2-methylpropionamidine) dihydrochloride
VA-067 = 2,2'-azobis(1-imino-1-pyrrolidino-2-methylpropane) dihydrochloride
TEOS = tetraethoxysilane
TMOS = tetramethoxysilane
GPS = (3-)glycidoxypropyltrimethoxysilane
$NH_4F$ = ammonium fluoride

[Table 4]

| | Formation of organic polymer particles | | | | | | | |
| | Raw material monomer | Distilled water | Surfactant | Polymerization initiator | Amount of water for dissolving polymerization initiator | Silane coupling agent | Emulsion polymerization | |
| | | | | | | | Temperature | Time |
| Example 2-1 | VAc 10 g | 200 g | C16TAB 1 g | AIBA 0.5 g | 10 g | - | 50°C | 60 minutes |
| Example 2-2 | VAc 10 g | 200 g | C12TAC 10 g | AIBA 2 g | 20 g | - | 40°C | 90 minutes |
| Example 2-3 | VAc 20 g | 200 g | C16TAB 1 g | AIBA 0.5 g | 10 g | - | 50°C | 60 minutes |
| Example 2-4 | VAc 1.6 g MMA 0.4 g | 200 g | C16TAB 0.2 g | ABA 0.1 g | 2 g | - | 60°C | 60 minutes |
| Example 2-5 | VAc8 g MA2 g | 200 g | C16TAB 1 g | VA-067 0.7 g | 10 g | - | 70°C | 60 minutes |
| Example 2-6 | VAc6 g MMA 2 g MA2g | 200 g | C16TAB 1 g | VA-067 0.7 g | 10 g | - | 65°C | 60 minutes |
| Example 2-7 | VAC 10 g | 200 g | C16TAB 1 g | AIBA 0.5 g | 10 g | GPS 1 g | 50°C | 60 minutes |
| Example 2-8 | VAc 10 g | 200 g | C16TAB 1 g | AIBA 0.5 g | 10 g | - | 50°C | 60 minutes |
| Comparative Example 2-1 | VAc 10 g | 200 g | C16TAB 1 g | AIBA 0.5 g | 10 g | - | 50°C | 60 minutes |
| Comparative Example 2-2 | VAc 10 g | 200 g | C16TAB 1 g | AIBA 0.5 g | 10 g | - | 50°C | 60 minutes |
| Comparative Example 2-3 | VAc 10 g | 200 g | C16TAB 1 g | AIBA 0.5 g | 10 g | - | 50°C | 60 minutes |
| Comparative Example 2-4 | BMA 9 g BA 1 g | 200 g | C16TAB 1 g | AIBA 0.5 g | 10 g | - | 50°C | 60 minutes |
| Comparative Example 2-5 | MMA 10 g | 200 g | C16TAB 1 g | AIBA 0.5 g | 10 g | - | 50°C | 60 minutes |

[Table 5]

| | Formation of composite particles | | | | | | | |
| --- | --- | --- | --- | --- | --- | --- | --- | --- |
| | Amount of emulsion to be taken out | Amount of distilled water to be added | Concentration of organic polymer particles | pH adjuster (pH after adjustment) | Fluoride ions | Raw material for silicon compound | Temperature and time to add raw material | Temperature and time to be kept after addition of raw material |
| Example 2-1 | 40 g | 150 g | 1 % by mass | Acetic acid (4) | - | TEOS 8 g | 40°C, 8h | 40°C, 5h |
| Example 2-2 | 40 g | 150 g | 1 % by mass | Nitric acid (3) | - | TMOS 10 g | 30°C, 8h | 30°C, 3h |
| Example 2-3 | 40 g | 150 g | 2 % by mass | Acetic acid (5) | - | TEOS 8 g | 40°C, 25h | 40°C, 5h |
| Example 2-4 | 200 g | - | 1 % by mass | Acetic acid (4) | - | TEOS 8 g | 40°C, 8h | 40°C, 5h |
| Example 2-5 | 40 g | 150 g | 1 % by mass | Acetic acid (4) | - | TEOS 8 g | 40°C, 8h | 40°C, 5h |
| Example 2-6 | 40 g | 150 g | 1 % by mass | Acetic acid (4) | - | TEOS 8 g | 40°C, 8h | 40°C, 5h |
| Example 2-7 | 40 g | 150 g | 1 % by mass | Acetic acid (4) | - | TEOS 8 g | 40°C, 8h | 40°C, 5h |
| Example 2-8 | 40 g | 150 g | 1 % by mass | Acetic acid (4) | $NH_4F$ 0.002 g | TEOS 8 g | 40°C, 8h | 40°C, 5h |
| Comparative Example 2-1 | 40 g | 150 g | 1 % by mass | Acetic acid (4) | - | TEOS 8 g | 40°C, 8h | 40°C, 5h |
| Comparative Example 2-2 | 40 g | 150 g | 1 % by mass | Acetic acid (4) | - | TEOS 8 g | 40°C, 8h | 40°C, 5h |
| Comparative Example 2-3 | 40 g | 150 g | 1 % by mass | Acetic acid (4) | | TEOS 8 g | 40°C, 8h | 40°C, 5h |
| Comparative Example 2-4 | 40 g | 150 g | 1 % by mass | Acetic acid (4) | | TEOS 8 g | 40°C, 8h | 40°C, 5h |
| Comparative Example 2-5 | 40 g | 150 g | 1 % by mass | Acetic acid (4) | | TEOS 8 g | 40°C, 8h | 40°C, 5h |

[Table 6]

| | Removal of core | | | | | |
| --- | --- | --- | --- | --- | --- | --- |
| | Amount of composite particles to be taken out a) amount of solution to be taken out b) concentration of composite particles in solution to be taken out | Nitric acid a) amount of nitric acid (concentration of 60% by mass) to be added b) parts by mass of nitric acid to be added based on 1 part by mass of composite particles | Hydrogen peroxide a) amount of hydrogen peroxide solution (concentration of 30% by mass) to be added b) parts by mass of hydrogen peroxide to be added based on 1 part by mass of composite particles | Heating method | Pressure | Time |
| Example 2-1 | a) 10 g b) 1% | a) 0.7 g b) 4.2 | a) 1.1 g b) 3.3 | 200°C Microwave | 3 MPa | 10 minutes |
| Example 2-2 | a) 10 g b) 2% | a) 1.2 g b) 3.6 | a) 1.6 g b) 2.4 | 180°C External heating | 2 MPa | 60 minutes |
| Example 2-3 | a) 10 g b) 0.5% | a) 1 g b) 12 | a) 1.5 g b) 9 | 240°C Microwave | 5 MPa | 30 minutes |
| Example 2-4 | a) 10 g b) 1% | a) 5 g b) 30 | a) 8 g b) 24 | 240°C Microwave | 5 MPa | 30 minutes |
| Example 2-5 | a) 10 g b) 1% | a) 3.5 g b) 21 | a) 5.5 g b) 16.5 | 240°C External heating | 5 MPa | 60 minutes |
| Example 2-6 | a) 10 g b) 1% | a) 6g b) 36 | a) 10 g b) 30 | 250°C Microwave | 5 MPa | 60 minutes |
| Example 2-7 | a) 10 g b) 1% | a) 1 g b) 6 | a) 1.5 g b) 4.5 | 200°C Microwave | 3 MPa | 10 minutes |
| Example 2-8 | a) 10 g b) 1% | a) 1 g b) 6 | a) 1.5 g b) 4.5 | 220°C Microwave | 3 MPa | 30 minutes |
| Comparative Example 2-1 | a) 10 g b) 1% | a) 0.15 g b) 0.9 | a) 1.1 g b) 3.3 | 200°C Microwave | 5 MPa | 30 minutes |
| Comparative Example 2-2 | a) 10 g b) 1% | a) 0.7 g b) 4.2 | a) 0.24 g b) 0.7 | 200°C Microwave | 5 MPa | 30 minutes |
| Comparative Example 2-3 | a) 10 g b) 1% | a) 0.3 g b) 1.8 | a) 0.4 g b) 1.2 | 145°C Microwave | 2 MPa | 30 minutes |
| Comparative Example 2-4 | a) 10 g b) 1% | a) 0,7 g b) 4.2 | a) 1.1 g b) 3.3 | 200°C Microwave | 3 MPa | 10 minutes |
| Comparative Example 2-5 | a) 10 g b) 1% | a) 0.7 g b) 4.2 | a) 1.1 g b) 3.3 | 200°C Microwave | 3 MPa | 10 minutes |

[Table 7]

|  | Evaluation of organic polymer particles | | Evaluation of composite particles | | |
|---|---|---|---|---|---|
|  | Zeta potential after pH adjustment | Average particle size of organic polymer particle (TEM) | Average particle size of composite particle (TEM) | Thickness of shell (TEM) | Amount of change in average particle size before and after coating shell (dynamic light scattering method) |
| Example 2-1 | 52 mV | 37 nm | 45 nm | 4nm | +9 nm |
| Example 2-2 | 31 mV | 10 nm | 14 nm | 2 nm | +4 nm |
| Example 2-3 | 70 mV | 82 nm | 124 nm | 21 nm | +46 nm |
| Example 2-4 | 40 mV | 42 nm | 51 nm | 4.5 nm | +10 nm |
| Example 2-5 | 22 mV | 53 nm | 59 nm | 3 nm | +7 nm |
| Example 2-6 | 28 mV | 50 nm | 58 nm | 4 nm | +10 nm |
| Example 2-7 | 50 mV | 35 nm | 50 nm | 7.5 nm | +16 nm |
| Example 2-8 | 52 mV | 35 nm | 55 nm | 10 nm | +22 |
| Comparative Example 2-1 | 53 mV | 36 nm | 46 nm | 5 nm | +10 nm |
| Comparative Example 2-2 | 52 mV | 36 nm | 45 nm | 4 nm | +9nm |
| Comparative Example 2-3 | 52 mV | 38 nm | 46 nm | 4 nm | +9nm |
| Comparative Example 2-4 | 41 mV | 50 nm | 56 nm | 3 nm | +7 nm |
| Comparative Example 2-5 | 45 mV | 43 nm | 50 nm | 3.5 nm | +7nm |

[Table 8]

|  | Hollow particles evaluation | | | | | | |
|---|---|---|---|---|---|---|---|
|  | Content of carbon after removing core (% by mass) | Average particle size (TEM) | Thickness of shell (TEM) | Amount of change in average particle size before and after removing core (dynamic light scattering method) | Ratio ($IQ_2/IQ_4$) | Specific surface area ($S_B$) by BET ($m^2/g$) | Ratio ($S_B/S_c$) |
| Example 2-1 | 0.17 | 44 nm | 4 nm | $\pm$0 nm | 0.41 | 390 | 6.3 |
| Example 2-2 | 1.1 | 15 nm | 2 nm | +1 nm | 0.71 | 1036 | 5.7 |
| Example 2-3 | 0.07 | 120 nm | 18 nm | -3 nm | 0.27 | 181 | 8.0 |
| Example 2-4 | 0.25 | 50 nm | 4 nm | $\pm$0 nm | 0.35 | 293 | 5.4 |
| Example 2-5 | 0.31 | 58 nm | 3 nm | -2 nm | 0.48 | 425 | 9.0 |
| Example 2-6 | 0.26 | 58 nm | 4 nm | -1 nm | 0.39 | 347 | 7.4 |
| Example 2-7 | 0.73 | 56 nm | 7nm | +1 nm | 0.38 | 306 | 6.3 |
| Example 2-8 | 0.29 | 54 nm | 9 nm | -1 nm | 0.34 | 283 | 5.6 |
| Comparative Example 2-1 | 16.3 | - | - | - | - | - | - |

(continued)

| | Hollow particles evaluation | | | | | | |
|---|---|---|---|---|---|---|---|
| | Content of carbon after removing core (% by mass) | Average particle size (TEM) | Thickness of shell (TEM) | Amount of change in average particle size before and after removing core (dynamic light scattering method) | Ratio $(IQ_2/IQ_4)$ | Specific surface area $(S_B)$ by BET $(m^2/g)$ | Ratio $(S_B/S_c)$ |
| Comparative Example 2-2 | 13.8 | - | - | - | - | - | - |
| Comparative Example 2-3 | 12.7 | - | - | - | - | - | - |
| Comparative Example 2-4 | 4.7 | - | - | - | - | - | - |
| Comparative Example 2-5 | 6.2 | - | - | - | - | - | - |

(Comparative Example 2-6)

In the same manner as the process described in Example 2 in Patent Literature 2 (Japanese Patent Application Laid-Open Publication No. 2001-233611), $SiO_2 \times Al_2O_3$ was used as the core particle, a first silica coating layer was formed on this using a silicic acid solution, and the core particle was then removed by a hydrochloric acid aqueous solution; further, a second silica coating layer was formed using tetraethoxysilane (ethyl silicate (TEOS)) to produce hollow particles; further, replacement of the solvent by ethanol was performed to obtain a slurry in which the concentration of the solid content was 20%. The average particle size was 50 nm, and the thickness of the shell was 10 nm, the average particle size and the thickness of the shell being measured from the taken pictures of particle images enlarged by a transmission electron microscope using the powder obtained by drying part of the slurry. When the amount of change in the average particle size from the particles contained in the solution before removal of the core particle to the particles contained in the slurry after removal of the core was measured by a dynamic light scattering apparatus, the amount of change in average particle size was +32 nm.

Using 0.5 g of the powder obtained by vacuum drying the slurry at room temperature, solid-state NMR ($^{29}$Si/MAS) measurement was performed in the same manner as in Example 2-1. From the measurement result, the ratio ($I_{Q2}/I_{Q4}$) of an integrated intensity ($I_{Q2}$) of a peak ($Q^2$) attributed to silicon in which the number of bridging oxygen was 2 to an integrated intensity ($I_{Q4}$) of a peak ($Q^4$) attributed to silicon in which the number of bridging oxygen was 4 was calculated; the ratio was 0.23. Moreover, using 0.2 g of this powder, the specific surface area was determined by a BET single point method with an automatic specific surface area measurement apparatus (made by Micro Data Co., Ltd., Micro Sorp 423211); the specific surface area was 102 m$^2$/g. When the ratio ($S_B/S_c$) of this value ($S_B$) and ($S_c$) to be determined by the following expression was calculated, the ratio was $S_B/S_c = 1.9$:

$$S_c(m^2/g) = 6000/D_p(nm) \cdot \rho$$

wherein $D_p$ is the average particle size of the hollow particles determined by observation by the TEM (50 nm), and r is the density of silica (2.2 g/cm$^3$).

(Example 2-9)

Approximately 150 g of a water slurry containing 10% by mass of the hollow particles as the solid content and dispersed by a wet jet mill at a discharging pressure of 245 MPa was obtained in the same manner as in Example 2-1. Then, cross flow ultrafiltration was performed to obtain approximately 100 g of the slurry in which the solvent, i.e., water was replaced by isopropanol and 15% by mass of the hollow particles were contained as the solid content. The amount of water in this slurry was measured by a Karl-Fischer method, and the remainder obtained by subtracting this from 100% by mass was considered as the total amount of the hollow particles and the organic solvent; as a result, the total amount was 91.5% by mass. The average particle size was 43 nm, and the thickness of the shell was 4 nm, the average particle size and the thickness of the shell being measured by drying part of the slurry and arbitrarily extracting 100 particle images from the taken pictures of particle images enlarged by a transmission electron microscope. The average particle size was measured by a dynamic light scattering apparatus, and compared with the average particle size of the particle immediately before the solvent was replaced by isopropanol; then, the amount of change was -1 nm, and no remarkable aggregation of the particles due to replacement of the solvent was caused.

(Example 2-10)

50 g of the slurry (containing 15% by mass of the hollow particles) after replacement by isopropanol obtained in Example 2-9 was weighed, filled into a separable flask, and stirred using a magnetic stirrer. Next, methacryloxypropyltrimethoxysilane (a silane coupling agent) was added at an amount equivalent to 1/10 of the hollow particles in mass (0.75 g); then, heating was performed in a water bath while stirring was performed to keep the temperature at 70°C for 3 hours. After cooling, 10 g of the slurry was weighed, and subjected to centrifugal sedimentation to obtain a precipitate. 8.5 g of isopropanol was added to this and stirred, and the precipitate was then washed by 5 repeated operations to perform centrifugal sedimentation to obtain a precipitate. This was vacuum dried at 25°C for one day, and then gas chromatography and mass spectrometry (GC/MS) were performed; then, methacrylic acid derived from the silane coupling agent was detected, and it was found that the hollow particles were coated with the silane coupling agent. The remaining slurry was dispersed by an ultrasonic homogenizer. The average particle size was 45 nm, and the thickness of the shell was 4 nm, the average particle size and the thickness of the shell being measured by drying part of the slurry after dispersion and arbitrarily extracting 100 particle images from the taken pictures of particle images enlarged by a transmission electron microscope. The average particle size was measured by a dynamic light scattering apparatus, and compared with the average particle size of the hollow particles before the silane coupling treatment; then, the amount of change was +1 nm, and no remarkable aggregation of the particles due to the silane coupling treatment was caused.

(Example 2-11)

30 g of the slurry after coating with the silane coupling agent and dispersion obtained in Example 2-10 was weighed, and filled into a recovery flask. 300 g of methyl isobutyl ketone was added to this; using a rotary evaporator, distillation was performed in a water bath at 85°C to replace the solvent. Heating was stopped at a point of time when the remaining product was 33 g, followed by cooling to 25°C to obtain a slurry. The amount of water in this slurry was measured by a Karl-Fischer method, and the remainder obtained by subtracting this from 100% by mass was considered as the total amount of the hollow particles and the organic solvent; as a result, the total amount was 99.6% by mass. Further, the contents of methyl isobutyl ketone and isopropanol were analyzed by gas chromatography and mass spectrometry (GC/MS); as a result, the content of methyl isobutyl ketone was 75% by mass and that of isopropanol was 9% by mass. Next, the slurry was dispersed by an ultrasonic homogenizer. The average particle size was 46 nm, and the thickness of the shell was 4 nm, the average particle size and the thickness of the shell being measured by drying part of the slurry after dispersion and arbitrarily extracting 100 particle images from the taken pictures of particle images enlarged by a transmission electron microscope. Further, the average particle size was measured by a dynamic light scattering apparatus, and compared with the average particle size of the hollow particles before replacement of the solvent; then, the amount of change was +1 nm, and no remarkable aggregation of the particles due to replacement of the solvent was caused.

(Example 2-12)

4.2 g of the slurry (containing 15% by mass of the hollow particles) after replacement by isopropanol obtained in Example 2-9 (equivalent to 0.63 g of the hollow particles) was weighed; 0.71 g of pentaerythritol triacrylate (PETA) as a matrix for formation of a coating film, 0.05 g of an ultraviolet curing agent (made by BASF SE, a photopolymerization initiator, trade name: IRGACURE 907), and 54.3 g of isopropanol were added to this and mixed to prepare a coating material for formation of a transparent coating film.

Using a spin coater (made by Tokiwa Vacuum Equipment Co., Ltd., SPN-4500 V), this was dropped onto a transparent triacetylcellulose (TAC) substrate whose thickness was 80 $\mu$m and that was rotated at the number of rotation of 1500 rpm to form a coating film. The coating film was kept at room temperature to be dried, and then irradiated with an ultraviolet at an exposure dose of 200 mJ/cm$^2$ for several seconds using an UV lamp to cure the coating film; thus, a substrate with a coating film (thickness of approximately 100 nm) was produced. Using a haze meter (made by Nippon Denshoku Industries Co., Ltd., NDH-5000), the haze (degree of cloudiness) of this substrate with a coating film was measured by a method according to JIS K 1736; then, the haze was 0.1%. A surface of the substrate on the opposite side of the coating film of the substrate was uniformly polished by a sandpaper, filled in with a black coating material, and a spectroscopic reflectance spectrum was measured at a wavelength of 400 to 800 nm and at 5° and -5° from the surface on the coating film side using an UV-visible spectrophotometer (made by JASCO Corporation, V-650); when the minimal reflectance was measured from the obtained reflectance spectrum, it was 0.27%.

(Comparative Example 2-7)

A coating material for formation of a transparent coating film was prepared in the same manner as in Example 2-12 except that instead of the slurry after replacement by isopropanol obtained in Example 2-9, 3.1 g of the ethanol slurry (containing 20% by mass of the hollow particles) obtained in Comparative Example 2-6 (equivalent to 0.62 g of the hollow particles) was used, to produce a substrate with a coating film. Further, the haze and minimal reflectance of the substrate with a coating film were measured in the same manner as in Example 2-12; as a result, the haze was 0.3% and the minimal reflectance was 0.38%.

(Example 2-13)

4.2 g of the slurry (containing 15% by mass of the hollow particles) after coating with the silane coupling agent, replacement by methyl isobutyl ketone, and dispersion obtained in Example 2-9 (equivalent to 0.63 g of the hollow particles) was weighed; 0.71 g of pentaerythritol triacrylate (PETA) as a matrix for formation of a coating film, 0.05 g of an ultraviolet curing agent (IRGACURE 907), and 54.3 g of methyl isobutyl ketone were added to this and mixed to prepare a coating material for formation of a transparent coating film. In the same manner as in Example 2-12, this was applied to a TAC substrate and cured to produce a substrate with a coating film (thickness of approximately 100 nm), and the haze and minimal reflectance were measured; as a result, the haze was 0.1 % and the minimal reflectance was 0.25%.

(Example 2-14)

5.0 g of pentaerythritol triacrylate (PETA), 0.2 g of an ultraviolet curing agent (made by BASF SE, a photopolymerization initiator, trade name: IRGACURE 184), 10 g of a filling material for a hard coat (made by Nissan Chemical Industries, Ltd., organosol, $SiO_2$: 30% by mass containing MIBK slurry, trade name: MIBK-ST), and 90 g of methyl isobutyl ketone were mixed to prepare a coating solution for formation of a hard coat layer. This was applied onto a transparent TAC substrate whose thickness was 80 mm by a bar coater, and was then stored at room temperature for one day to be dried; then, the coating film was irradiated with an ultraviolet at an exposure dose of 200 mJ/cm$^2$ using an UV lamp for approximately 1 minute to be cured; thus, a substrate having a hard coat layer with a film thickness of approximately 3 $\mu$m was produced.

Then, a coating material for formation of a transparent coating film prepared in the same manner as in Example 2-13 was applied onto this substrate in the same manner as in Example 2-12 using a spin coater, and cured to produce a substrate with a coating film (thickness of approximately 100 nm) and a hard coat layer; the haze and minimal reflectance were measured; as a result, the haze was 0.1% and the minimal reflectance was 0.22%.

**Industrial Applicability**

The hollow particles according to the present invention and the slurry prepared by dispersing this can be suitably used as filling materials such as anti-reflective materials, low dielectric constant materials, and insulating material, and carriers for a drug delivery system. Especially, a coating material for formation of a coating film that uses the hollow particles according to the present invention and the slurry prepared by dispersing this and the substrate with a coating film have high transparency and anti-reflective ability.

**Claims**

1. A hollow particle comprising a silicon compound, wherein an average particle size is 5 to 150 nm, a thickness of the shell is 1 to 25 nm, and a ratio ($I_{Q2}/I_{Q4}$) of an integrated intensity ($I_{Q2}$) of a peak ($Q^2$) attributed to silicon in which the number of bridging oxygen is 2 to an integrated intensity ($I_{Q4}$) of a peak ($Q^4$) attributed to silicon : in which the number of bridging oxygen is 4, in solid-state NMR ($^{29}$Si/MAS) measurement is not less than 0.25 and not more than 1.0.

2. A hollow particle according to claim 1, wherein a ratio ($S_B/S_c$) of a specific surface area ($S_B$) measured by a BET method to a specific surface area ($S_c$) represented by a following expression is more than 5.0 and not more than 100:

$$S_C(m^2/g) = 6000/D_p(nm) \cdot \rho$$

(wherein $D_p$ is average particle size (nm) of the hollow particle, and $\rho$ is density (g/cm$^3$) of a component that forms the shell of the hollow particle.).

3.  A process for producing the hollow particle according to claims 1 or 2, the process comprising:

    to a solution containing organic polymer-silicon compound composite particle including a core comprising an organic polymer containing polyvinyl acetate as a principal component and a shell comprising a silicon compound, not less than 95% by mass of a solvent of the solution being water,
    adding 1.0 to 50 parts by mass of nitric acid and 0.8 to 40 parts by mass of hydrogen peroxide based on 1.0 part by mass of the organic polymer-silicon compound composite particle in the solution; and subsequently, keeping the solution at a high temperature of 150 to 250°C and at high pressure to decompose the organic polymer by oxidation.

4.  The process for producing the hollow particle according to claim 3, wherein heating at the time of keeping at a high temperature and high pressure is microwave heating.

5.  A slurry containing the hollow particle according to claim 1 or 2 and an organic solvent, wherein a content of the hollow particle is 5 to 40% by mass, a total content of the hollow particle and the organic solvent is 90 to 99.9% by mass, and the remainder is mainly water.

6.  The slurry according to claim 5, wherein the organic solvent is an alcohol that is liquid at 25°C and/or a ketone that is liquid at 25°C.

7.  A coating material for formation of a transparent coating film, the coating material prepared by comprising the hollow particle according to claim 1 or 2 and a matrix for formation of a coating film.

8.  A substrate with a coating film, wherein a coating film prepared by comprising the hollow particle according to claim 1 or 2 and a matrix for formation of a coating film is formed alone or with other coating film on a surface of the substrate.

**Patentansprüche**

1.  Hohles Partikel, das eine Siliciumverbindung umfasst, wobei eine durchschnittliche Partikelgröße 5 bis 150 nm beträgt, eine Dicke der Hülle 1 bis 25 nm beträgt und ein Verhältnis ($I_{Q2}/I_{Q4}$) einer integrierten Intensität ($I_{Q2}$) eines Peaks ($Q^2$), der Silicium, dessen Anzahl an Brückensauerstoff 2 beträgt, zugeordnet ist, zu einer integrierten Intensität ($I_{Q4}$) eines Peaks ($Q^4$), der Silicium, dessen Anzahl an Brückensauerstoff 4 beträgt, zugeordnet ist, bei der Festkörper-NMR-Messung ($^{29}$Si/MAS) mindestens 0,25 und höchstens 1,0 beträgt.

2.  Hohles Partikel nach Anspruch 1, wobei ein Verhältnis ($S_B/S_C$) einer mit einem BET-Verfahren gemessenen spezifischen Oberfläche ($S_B$) zu einer durch folgende Gleichung dargestellten spezifischen Oberfläche ($S_c$) mehr als 5,0 und höchstens 100 beträgt:

$$S_C(m^2/g) = 6000/D_p(nm) \cdot \rho$$

(wobei $D_p$ die durchschnittliche Partikelgröße (nm) des hohlen Partikels ist und $\rho$ die Dichte (g/cm$^3$) eines die Hülle des hohlen Partikels bildenden Bestandteils ist).

3.  Verfahren zur Herstellung des hohlen Partikels nach Anspruch 1 oder 2, wobei das Verfahren umfasst:

    zu einer Lösung, enthaltend Verbundpartikel aus einer organischen Polymer-Silicium-Verbindung mit einem Kern, der ein organisches Polymer umfasst, das Polyvinylacetat als Hauptbestandteil enthält, und einer Hülle, die eine Siliciumverbindung umfasst, wobei mindestens 95 Masse% eines Lösungsmittels der Lösung Wasser sind,

Zugeben von 1,0 bis 50 Masseteilen Salpetersäure und 0,8 bis 40 Masseteilen Wasserstoffperoxid basierend auf 1,0 Masseteil des Verbundpartikels aus einer organischem Polymer-Silicium-Verbindung in der Lösung; und anschließend Halten der Lösung bei einer hohen Temperatur von 150 bis 250°C und bei hohem Druck, um das organische Polymer durch Oxidation zu zersetzen.

4. Verfahren zur Herstellung des hohlen Partikels nach Anspruch 3, wobei das Erhitzen während des Haltens bei einer hohen Temperatur und hohem Druck mit Mikrowellen erfolgt.

5. Aufschlämmung, die das hohle Partikel nach Anspruch 1 oder 2 und ein organisches Lösungsmittel enthält, wobei ein Gehalt des hohlen Partikels 5 bis 40 Masse% beträgt, ein Gesamtgehalt des hohlen Partikels und des organischen Lösungsmittels 90 bis 99,9 Masse% beträgt und der Rest hauptsächlich Wasser ist.

6. Aufschlämmung nach Anspruch 5, wobei das organische Lösungsmittel ein bei 25°C flüssiger Alkohol und/oder ein bei 25°C flüssiges Keton ist.

7. Beschichtungsmaterial zur Ausbildung eines transparenten Beschichtungsfilms, das Beschichtungsmaterial ist hergestellt durch Einbeziehen des hohlen Partikels nach Anspruch 1 oder 2 und einer Matrix zur Ausbildung eines Beschichtungsfilms.

8. Substrat mit einem Beschichtungsfilm, wobei ein Beschichtungsfilm hergestellt durch Einbeziehen des hohlen Partikels nach Anspruch 1 oder 2 und einer Matrix zur Ausbildung des Beschichtungsfilm allein oder mit anderem Beschichtungsfilm auf einer Oberfläche des Substrats ausgebildet ist.

**Revendications**

1. Particule creuse comprenant un composé de silicium, dans laquelle une taille de particule moyenne est comprise entre 5 et 150 nm, une épaisseur de l'enveloppe est comprise entre 1 et 25 nm, et un rapport ($I_{Q2}/I_{Q4}$) d'une intensité intégrée ($I_{Q2}$) d'un pic ($Q^2$) attribué au silicium dans lequel le nombre de l'oxygène en position de pont est 2 à une intensité intégrée ($I_{Q4}$) d'un pic ($Q^4$) attribué au silicium dans lequel le nombre de l'oxygène en position de pont est 4, dans une mesure RMN à l'état solide ($^{29}$Si/MAS), n'est pas inférieur à 0,25 et n'est pas supérieur à 1,0.

2. Particule creuse selon la revendication 1, dans laquelle un rapport ($S_B/S_c$) d'une surface spécifique ($S_B$) mesurée par un procédé BET à une surface spécifique ($S_c$) représentée par une expression suivante est supérieur à 5,0 et non supérieur à 100:

$$S_c(m^2/g) = 6000/D_p(nm) \cdot \rho$$

(où $D_p$ est la taille de particule moyenne (nm) de la particule creuse, et $\rho$ est la densité (g/cm$^3$) d'un composant qui forme l'enveloppe de la particule creuse).

3. Processus pour produire la particule creuse selon la revendication 1 ou 2, le processus comprenant :

à une solution contenant particule composite de composé de silicium-polymère organique incluant un noyau comprenant un polymère organique contenant de l'acétate de polyvinyle en tant que composant principal et une enveloppe comprenant un composé de silicium, pas moins de 95 % en masse d'un solvant de la solution étant de l'eau,

l'ajout de 1,0 à 50 parties en masse d'acide nitrique et 0,8 à 40 parties en masse de peroxyde d'hydrogène sur la base de 1,0 partie en masse de la particule composite de composé de silicium-polymère organique dans la solution ; et ensuite le maintien de la solution à une température élevée de 150 à 250 °C et à une pression élevée pour décomposer le polymère organique par oxydation.

4. Processus pour produire la particule creuse selon la revendication 3, dans lequel le chauffage lors du maintien à une température élevée et à une pression élevée est un chauffage à micro-ondes.

**5.** Bouillie contenant la particule creuse selon la revendication 1 ou 2 et un solvant organique, dans laquelle une teneur de la particule creuse est de 5 à 40 % en masse, une teneur totale de la particule creuse et du solvant organique est de 90 à 99,9 % en masse, et le reste est principalement de l'eau.

**6.** Bouillie selon la revendication 5, dans laquelle le solvant organique est un alcool qui est liquide à 25 °C et/ou une cétone qui est liquide à 25 °C.

**7.** Matériau de revêtement pour la formation d'un film de revêtement transparent, le matériau de revêtement étant préparé en comprenant la particule creuse selon la revendication 1 ou 2 et une matrice pour la formation d'un film de revêtement.

**8.** Substrat avec un film de revêtement, dans lequel un film de revêtement préparé en comprenant la particule creuse selon la revendication 1 ou 2 et une matrice pour la formation d'un film de revêtement est formé seul ou avec autre film de revêtement sur une surface du substrat.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6142491 A
- JP 2001233611 A
- WO 2006009132 A
- JP 2005263550 A
- JP 2006256921 A
- JP 2006335605 A
- JP 2003522621 A

### Non-patent literature cited in the description

- *Journal of Chemical Engineeing of Japan,* 2004, vol. 37 (9), 1099
- *Chem.Mater.,* vol. 2002 (14), 1325
- *Chemical Communication,* 2003, 1010
- *Fresenius Jounal of Analytical Chemistry,* 1992, vol. 344 (6), 269
- *Langmuir,* vol. 2007 (23), 3062-3066
- Dai 4 han Jikkenkagakukouza 5 NMR. 1991, 229